Europäisches Patentamt

European Patent Office

Office européen des brevets

(19)

(11) Veröffentlichungsnummer: **0 191 455**
**A1**

# (12) EUROPÄISCHE PATENTANMELDUNG

(21) Anmeldenummer: 86101696.2

(22) Anmeldetag: 11.02.86

(51) Int. Cl.⁴: **B 28 D 1/04**

(30) Priorität: 11.02.85 DE 3504581

(43) Veröffentlichungstag der Anmeldung: 20.08.86
Patentblatt 86/34

(84) Benannte Vertragsstaaten: AT BE CH DE FR GB IT LI LU NL SE

(71) Anmelder: Steinbearbeitungs-Maschinenfabrik Carl Meyer GmbH & Co. KG, Postfach 380, D-8590 Marktredwitz (DE)

(72) Erfinder: Pöllmann, Josef, Dipl.-Ing. (FH), Griesstrasse 23, D-8590 Marktredwitz (DE)
Erfinder: Frahs, Rudolf, Ostengasse 6, D-8596 Mitterteich (DE)
Erfinder: Hecht, Josef, Schwalbachweg 12, D-8596 Mitterteich (DE)

(74) Vertreter: Weickmann, Heinrich, Dipl.-Ing. et al, Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Möhlstrasse 22, D-8000 München 80 (DE)

(54) Steinsäge zum Zerteilen von Steinplatten oder dergl.

(57) Bei einer Steinsäge zum Zerteilen von Steinplatten (12) mit wenigstens zwei an einer Brücke angebrachten Sägewerkzeugen, wird vorgeschlagen, in Bearbeitungsrichtung einem der beiden äusseren Sägewerkzeuge ein in die Sägefuge (38) eingreifendes Trennschwert (40) folgen zu lassen, wobei ein dem Trennschwert (40) folgender Trennschieber (56) zum seitlichen Abführen des abgetrennten Randstreifens (20) vorgesehen ist. Gegenüberliegend kann ein Hebeorgan (74) vorgesehen sein, welches den gegenüberliegenden Randstreifen (18) anhebt und in Querrichtung wegbewegt.

EP 0 191 455 A1

PATENTANWÄLTE    DIPL.-ING. H. WEICKMANN
DIPL.-ING. F. A. WEICKMANN; DIPL.-€0 191 455
DR.-ING. H. LISKA ; Dipl.-Phys.Dr.J.Prechtel

PREwe

Steinbearbeitungs-Maschinenfabrik
Carl Meyer
8590  Marktredwitz

8000 MÜNCHEN 86
POSTFACH 860 820
MÖHLSTRASSE 22
TELEFON (0 89) 98 03 52
TELEX 5 22 621
TELEGRAMM PATENTWEICKMANN MÜNCHEN

---

## Steinsäge zum Zerteilen von Steinplatten oder dergl.

---

Die Erfindung betrifft eine Steinsäge zum Zerteilen von Steinplatten oder dergl. mit wenigstens zwei an einem Werkzeugträger, ggf. einer Brücke, angebrachten Sägewerkzeugen, welche in
Richtung quer zur Verschiebebewegung der Steinplatte relativ
zum Werkzeugträger mit einstellbarem gegenseitigem Abstand versetzt sind.

Die Aufgabe der Erfindung liegt darin, mit einfachen Mitteln
das Ableiten zumindest eines Randstreifens der von den Sägewerkzeugen zerteilten Steinplatte zu ermöglichen.

Diese Aufgabe wird dadurch gelöst, daß in Bearbeitungsrichtung einem der Sägewerkzeuge, vorzugsweise einem der beiden
in Querrichtung äußeren Sägewerkzeuge, ein in die von diesem Sägewerkzeug hergestellte Sägefuge der Steinplatte eingreifendes Trennschwert folgt, und daß das Trennschwert oder
ein dem Trennschwert folgender Trennschieber einer Trennstation zwischen einer Ausgangsstellung in Flucht mit dem
Trennschwert und einer Trennstellung in Querrichtung bewegbar ist.

Das Trennschwert bzw. der Trennschieber greift in die Trennfuge ein und bewirken die gewünschte Aufspaltung des Materialstroms.

Alternativ oder zusätzlich zu dem Trennschwert mit Trennschieber kann ein dem Trennschieber gegenüberliegendes Hebeorgan in der Trennstation vorgesehen sein, welches einen Randstreifen der zerteilten Steinplatte anhebt und in Querrichtung wegbewegt.

Die besonders bevorzugte Kombination beider Mittel ermöglicht ein einfaches und zuverlässiges Wegleiten der beiden Randstreifen, die bei unregelmäßigem Außenumriß der zu zerteilenden Steinplatte in anderer Weise weiter zu verarbeiten sind, ggf. Abfall bilden. Bei einer derartigen Anordnung wird vorgeschlagen, daß das Trennschwert sowie das diesem zugeordnete, in Querrichtung äußere Sägewerkzeug relativ zum Werkzeugträger bezüglich der Querrichtung stationär sind, und daß eine Steuerung vorgesehen ist zur gleichzeitigen Querverlagerung des gegenüberliegenden äußeren Sägewerkzeugs und des Hebeorgans bei Abänderung der Schnittbreite. Die etwas aufwendige Justierung des Trennschwertes exakt in Flucht mit dem zugeordneten Sägewerkzeug, um zuverlässiges Eindringen des Trennschwerts in die Trennfuge sicherzustellen, ist also lediglich einmal vorzunehmen. Bei einer Abänderung der Schnittbreite wird das Hebeorgan synchron mit dem äußeren Sägewerkzeug quer verstellt. Eine Nachjustierung des Hebeorgans in der jeweiligen Einstellung ist (im Gegensatz zum Falle der Verwendung eines Trennschwertes) nicht erforderlich, da das Hebeorgan nicht in die Trennfuge eingreift und somit auch weniger genau positioniert sein darf.

Als Hebeorgan kommen vielfältige Hebemittel in Frage, z.B. Saugnapfheber. Besonders bevorzugt aufgrund des einfachen Aufbaus und zuverlässiger Funktion ist die Ausbildung des Hebeorgans als Heberechen mit Zinken, welche zwischen Stützorgane eingreifen, die die zerteilte Steinplatte tragen. Bevorzugt werden diese Stützorgane von Stützrollen gebildet.

In Weiterbildung der Erfindung wird vorgeschlagen, daß die Trennstation einen stationären, vorzugsweise brückenartigen, Hauptrahmen umfaßt, an welchem ein erster, den Trennschieber tragender Hilfsrahmen und/oder ein zweiter, das Hebeorgan tragender Hilfsrahmen in Querrichtung beweglich gelagert sind. Am zweiten Hilfsrahmen kann eine die Zinken tragende, zur Bearbeitungsrichtung im wesentlichen parallele Welle drehbar gelagert sein, die zwischen einer Einfahrstellung mit zur Querrichtung im wesentlichen parallelen Zinken, einer Rückzugsstellung mit angehobenen freien Zinkenenden und einer Abwurfstellung mit abgesenkten freien Zinkenenden verschwenkbar sein kann. Der gewünschte Wegtransport des entsprechenden Randstreifens der Steinplatte geht dann so vor sich, daß der zweite Hilfsrahmen bei in Einfahrstellung befindlicher Welle auf die zerteilte Steinplatte hin in Querrichtung bewegt wird, bis die Zinken sich unterhalb des Randstreifens befinden. Anschließend wird die Welle in die Rückzugsstellung verschwenkt und der zweite Hilfsrahmen in Querrichtung von der zerteilten Steinplatte wegbwegt. Zuletzt schließlich wird die Welle in die Abwurfstellung verschwenkt, woraufhin der von den Zinken bislang getragene Randstreifen von den Zinken heruntergleitet.

Bei herkömmlichen Steinsägen erfolgt die Zuführung der zu zerteilenden Steinplatte bzw. Steinplatten (bei vorangegangenem Plattenzerteilungsschnitt senkrecht zur nunmehrigen Vorschubrichtung) über einen kontinuierlich fördernden Förderer (Kettenförderer, Walzenförderer, Bahnförderer oder dergl.), auf welchem die Steinplatte bzw. Steinplatten aufliegen. Prinzipiell ist Schlupf zwischen der bzw. den Steinplatten und dem Transportorgan möglich. Ist der Sägewiderstand bei einem der Sägewerkzeuge momentan höher oder niedriger als bei den anderen Sägewerkzeugen, sei es aufgrund lokaler Materialunterschiede oder unterschiedlicher Werkzeugverschleißgrade, so kann während des Sägevorganges ein die Steinplatte bzw. Steinplatten verschwenkendes Drehmoment entstehen. Eine besondere Maßhaltigkeit, insbesondere Winkelgenauigkeit, der Trennschnitte ist somit nicht mehr gegeben. Die bei stationärem Sägebetrieb mögliche Einspannung des zu sägenden Gegenstandes, welche ein Verschwenken der Steinplatte ausschließt, ist bei kontinuierlichem Betrieb mit laufender Zuführung weiterer Steinplatten praktisch nicht möglich.

Um mit baulich einfachen Mitteln bei kontinuierlichem Betrieb für winkelhaltige Trennschnitte zu sorgen, wird erfindungsgemäß vorgeschlagen, daß den Trennwerkzeugen in Bearbeitungsrichtung ein stationäres Gleitauflager vorangeht, und daß ein an das in Bearbeitungsrichtung hintere Ende der wenigstens einen auf dem Gleitauflager liegenden, zu zerteilenden Steinplatte angreifender Transportschieber vorgesehen ist, welcher zwischen einer Rückzugsstellung und einer den Trennwerkzeugen nächstgelegenen Vorschubstellung in Bearbeitungsrichtung verschiebbar ist, und daß ein Förderer vorgesehen ist zum Transport der wenigstens einen zu zerteilenden Steinplatte auf das Gleitauflager im Bereich zwischen den Trennwerkzeugen und dem Transportschieber.

Während des Sägens auftretende Drehmomente mit zur Plattenebene senkrechter Drehachse werden von der Steinplatte auf den Transportschieber übertragen, welcher diese Drehmomente weiterleitet, ohne daß es zu einer Verdrehung der Steinplatte kommt. Kontinuierlicher Betrieb ist gewährleistet, da nach Durchführung eines Trennschnitts der Transportschieber zurückgezogen wird und dann vom Förderer die nächste Steinplatte bzw. der nächste Steinplattenpulk aus hintereinanderliegenden quer zur Bearbeitungsrichtung orientierten Plattenstreifen auf das Gleitauflager im Bereich zwischen den Trennwerkzeugen und dem Transportschieber transportiert wird. Es kann nun der nächste Schnitt durchgeführt werden.

Die erforderliche Drehmomentübertragung zwischen Steinplatte und Transportschieber wird in besonders einfacher Weise durch eine Leiste des Transportschiebers erreicht, welche an das hintere Plattenende, insbesondere an die hintere Plattenstirnfläche, angreift.

Die Leiste ist derart nahe an die Trennwerkzeuge heranzuführen, daß der jeweilige Trennschnitt vollständig durchgeführt werden kann. Hierzu ist es von Vorteil, die Leiste in die Bereiche zwischen die Bearbeitungswerkzeuge eindringen zu lassen (in der Vorschubstellung des Transportschiebers). Um dies ohne spezielle Vorformung der Leiste in einfacher Weise zu ermöglichen, wird vorgeschlagen, daß die Leiste aus einem von den Sägewerkzeugen schneidbaren Material besteht, vorzugsweise aus einem dem zu schneidenden Material im wesentlichen entsprechenden Material. Nach dem Einrichten der Sägemaschine erfolgt beim ersten Schnitt einer Steinplatte am Schluß der Vorschubbewegung des Transportschiebers ein Einschnitt in die Leiste durch das jeweilige Schneidwerkzeug. Von besonderem Vorteil ist auch, daß bei einer Abänderung der Lage der einzelnen Schneidwerkzeuge, insbesondere zur Einstellung einer neuen Schnittweite, unverändert dieselbe Leiste verwendet werden kann. Es werden dann dementsprechend neue Einschnitte in der Leiste erzeugt.

Die Förderrichtung des den Transportschieber mit Steinplatten beliefernden Förderers kann quer zur Bewegungsrichtung des Transportschiebers sein. Um die in vielen Fällen bevorzugte gestreckte Anordnung mit zur Bewegungsrichtung des Transportschiebers paralleler Förderrichtung des Förderers zu erhalten, wird vorgeschlagen, daß der Transportschieber zwischen einer Arbeitsstellung am Gleitauflager und einer vom Gleitauflager wenigstens entsprechend der Steinplattendicke entfernten Freigabestellung bewegbar ist. In der Freigabestellung kann dann vom vorangehenden Förderer unter dem Transportschieber hindurch die nächste Steinplatte bzw. der nächste Steinplattenpulk auf das Gleitauflager im Bereich zwischen den Trennwerkzeugen und dem Transportschieber transportiert werden.

Weiterhin wird ein den Transportschieber halternder, in Bearbeitungsrichtung bewegbarer Hilfsrahmen vorgeschlagen. An diesen Hilfsrahmen kann ein in Querrichtung verlaufender, den Transportschieber tragender Querbalken verschwenkbar gelagert sein. In einer von zwei Schwenkstellungen befindet sich der Transportschieber in seiner Arbeitsstellung und in der anderen Schwenkstellung in der Freigabestellung.

Erfindungsgemäß erfolgt die genau orientierte Anlage der wenigstens einen Steinplatte am Transportschieber zu Beginn der Transportbewegung vor dem Erreichen der Trennwerkzeuge aufgrund der rücktreibenden Reibungskraft zwischen Steinplatte und Gleitauflager. Falls die Steinplatte anfangs lediglich mit einem Eck an der Leiste anliegt, verschwenkt die Steinplatte anschließend zur vollflächigen Anlage an der Leiste. Die rücktreibende Reibungskraft erzeugt eine die Sägegenauigkeit wesentlich fördernde Vorspannkraft zwischen Steinplatte und Leiste. Damit diese Vorspannkraft nach teilweisem Durchgang der Steinplatte durch die Trennwerkzeuge durch den nun folgenden Förderer auf jeden Fall nicht reduziert wird, wird vorgeschlagen, daß dieser Förderer synchron, vorzugsweise aber geringfügig langsamer transportiert als der Transportschieber.

Die durch die vorstehend beschriebene Erfindung genaue Winkelhaltigkeit der Schnitte ist von besonderem Vorteil, wenn aus einer Steinplatte eine Vielzahl von kleineren Steinplatten herausgeschnitten werden sollen mit ein rechtwinkliges oder schiefwinkliges Gitter bildenden Trennfugen. In einem ersten Bearbeitungsschritt wird die Steinplatte in zur Bearbeitungsrichtung parallele Plattenstreifen zerteilt, sodann diese nebeneinanderliegenden Plattenstreifen bezüglich der Transportrichtung um 90° gedreht und dann entweder gemeinsam oder nacheinander durch eine zweite Steinsäge mit mehreren in Querrichtung versetzten Sägewerkzeugen geführt, so daß aus den Plattenstreifen die gewünschten, z.B. quadratischen kleineren Steinplatten entstehen. Für den ersten Schneidvorgang kommt bevorzugt die eingangs beschriebene Steinsäge in Betracht, welche für eine Abführung der nicht benötigten unregelmäßigen Randstreifen sorgt. Der zweite Bearbeitungsschritt wird bevorzugt aufgrund der Winkelhaltigkeit mit der darauffolgend angegebenen Steinsäge durchgeführt.

Um einen Steinplattenpulk aus in Förderrichtung eng hintereinanderliegenden Steinplatten, z.B. in Querrichtung orientierten Steinplattenstreifen, mit einfachen Mitteln wahlweise auftrennen zu können, insbesondere um einzelne Steinplatten nachfolgend jeweils für sich bearbeiten zu können, wird vorgeschlagen, daß zwei einander anschließende Förderer, vorzugsweise Kettenförderer, vorgesehen sind, wobei der in Bearbeitungsrichtung vordere Förderer in einer Vereinzelungs-Höhenposition tiefer liegt als der vorangehende Förderer, und wobei vorzugsweise ein Sensor im Übergangsbereich vorgesehen ist, welcher den Vorbeilauf der in Arbeitsrichtung hinteren Steinplattenenden feststellt. Aufgrund der unterschiedlichen Höhenlage wird die vorangehende Steinplatte als erstes mit ihrem Vorlaufende auf den anschließenden Förderer zu liegen kommen und schließlich nach Freigabe des hinteren Endes durch den vorangehenden Förderer auf den vorderen Förderer fallen. Diese Fallbewegung läßt sich durch den Sensor im Übergangsbereich feststellen, welcher eine die Förderer steuernde Steuerung dazu veranlaßt, den hinteren Förderer abzustellen.

Der Sensor kann vielerlei Gestalt annehmen, z.B. von einer Lichtschranke gebildet sein. Bevorzugt wird der Sensor von einem Schaltkontakt gebildet, welcher von dem im Vorbeilauf absinkenden hinteren Plattenende betätigbar ist.

Um wahlweise auch eine pulkweise Beförderung der Steinplatten zu ermöglichen, wird vorgeschlagen, daß der vordere Förderer in eine Arbeitshöhenstellung mit gleichem Niveau wie der hintere Förderer bewegbar ist. Ohne Änderung des gegenseitigen Abstandes können dann die Steinplatten weiterbefördert werden. Der Schaltkontakt wird nicht mehr betätigt, da er zu tief liegt.

Bevorzugt ist die Verwendung der beiden Förderer in Verbindung mit der Steinsäge mit Gleitauflager gemäß vorstehenden Ausführungen. Der vordere Förderer verläuft dann im Bereich des Gleitauflagers und ist zwischen der Vereinzelungsstellung, der Normalstellung und einer Absenkstellung unterhalb des Niveaus des Gleitauflagers bewegbar.

Das Gleitauflager kann von zur Bearbeitungsrichtung parallelen Lagerstreifen, vorzugsweise Kunststoffstreifen, gebildet sein.

Die Erfindung wird im folgenden an einem bevorzugten Ausführungsbeispiel an Hand der Zeichnung erläutert: Es zeigt:

Fig. 1    eine vereinfachte Draufsicht auf eine zwei Sägestationen umfassende Anordnung zum Zerteilen von Steinplatten;

Fig. 2    einen Detailschnitt nach Linie II-II der Anordnung in Fig. 1 durch die erste Sägestation sowie die nachfolgende Trennstation;

Fig. 3    einen Schnitt nach Linie III-III in den Figuren 1 und 2;

Fig. 4    einen Detailschnitt nach Linie IV-IV durch die zweite Schneidestation der Anordnung in Fig. 1 und

Fig. 5    einen Schnitt nach Linie V-V in den Figuren 1 und 4.

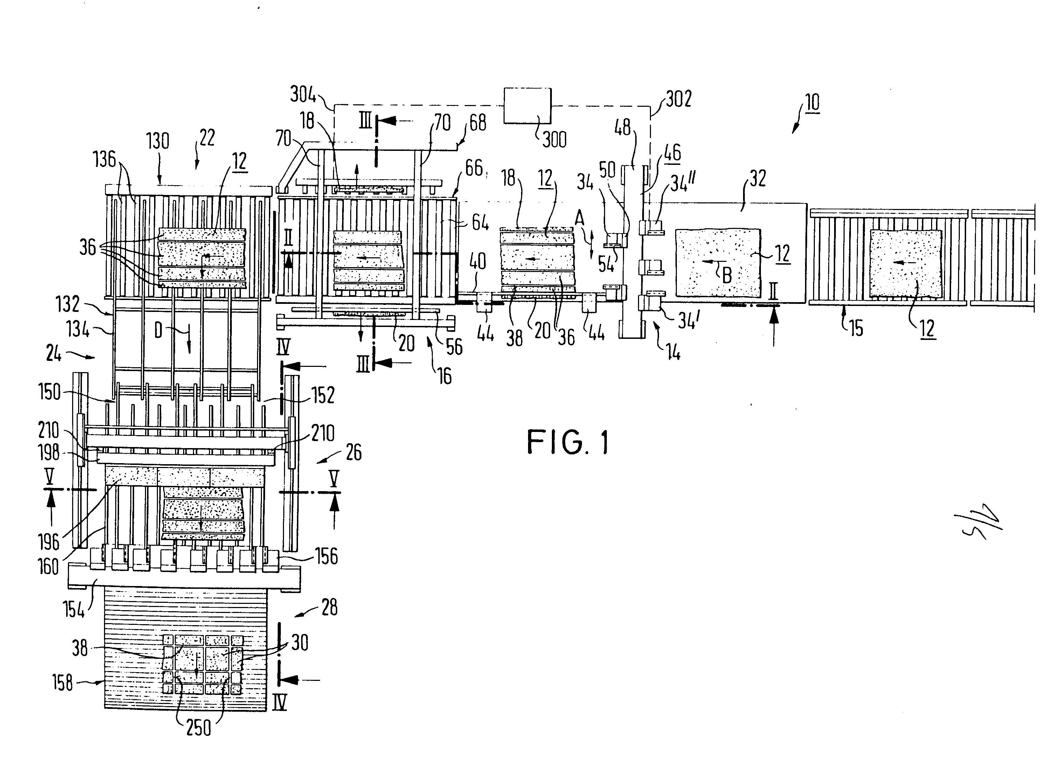

Die Anordnung 10 zum Zerteilen von Steinplatten 12 oder dergl. gemäß Fig. 1 besteht der Reihe nach aus folgenden Stationen:

Einer ersten Sägestation 14, der die Steinplatten 12 über einen vorangehenden Rollenförderer 15 zugeführt werden, einer nachfolgenden Trennstation 16 zum Entfernen der beiden in der Sägestation 14 abgetrennten unregelmäßigen Längsränder 18 und 20 der Steinplatte 12, einer nachfolgenden Wendestation 22, einer darauffolgenden Vereinzelungsstation 24 sowie schließlich einer zweiten Sägestation 26 mit nachfolgendem Kettenförderer 28 zum Abtransport der durch gitterartig angeordnete Trennfugen voneinander getrennten entsprechend kleineren Steinplättchen 30.

In der ersten Sägestation 14 wird die vom vorangehenden Rollenförderer 15 einem Bandförderer 32 übergebene Steinplatte 12 durch mehrere, im dargestellten Beispiel 5 in Querrichtung (Doppelpfeil A in Fig. 1 senkrecht zur Bearbeitungsrichtung B) gegeneinander versetzte Sägewerkzeuge 34 in parallel nebeneinanderliegende Plattenstreifen 36 mit zur Bearbeitungsrichtung B parallelen Trennfugen 38 zwischen den Plattenstreifen 36 zerteilt. Da die zu sägende Steinplatte 12 im allgemeinen unregelmäßigen Umriß aufweist, ist die äußere Längsseite der beiden Randstreifen 18 und 20 ebenfalls unregelmäßig; die beiden Randstreifen 18 und 20 werden daher von dem Plattenstreifen 36 in der Trennstation 16 abgetrennt und einer anderweitigen Verwendung zugeführt oder als Abfall behandelt. Um diesen Verschnitt möglichst gering zu halten, wird die Steinplatte 12 vor Erreichen der Sägewerkzeuge 34 (im dargestellten Beispiel: Kreissägen) z.B. von Hand derart orientiert, daß einer der Randstreifen, z.B. der in Fig.1 untere Randstreifen 20 minimale Breite in Querrichtung hat. Entsprechend den Produktionsanforderungen kann mit Hilfe eines Rechners der Querabstand der Sägewerkzeuge 34 vom in Fig. 1 unteren stationären Sägewerkzeug 34' derart festgelegt werden, daß sich eine optimale Ausnutzung der Steinplattenbreite in Querrichtung ergibt.

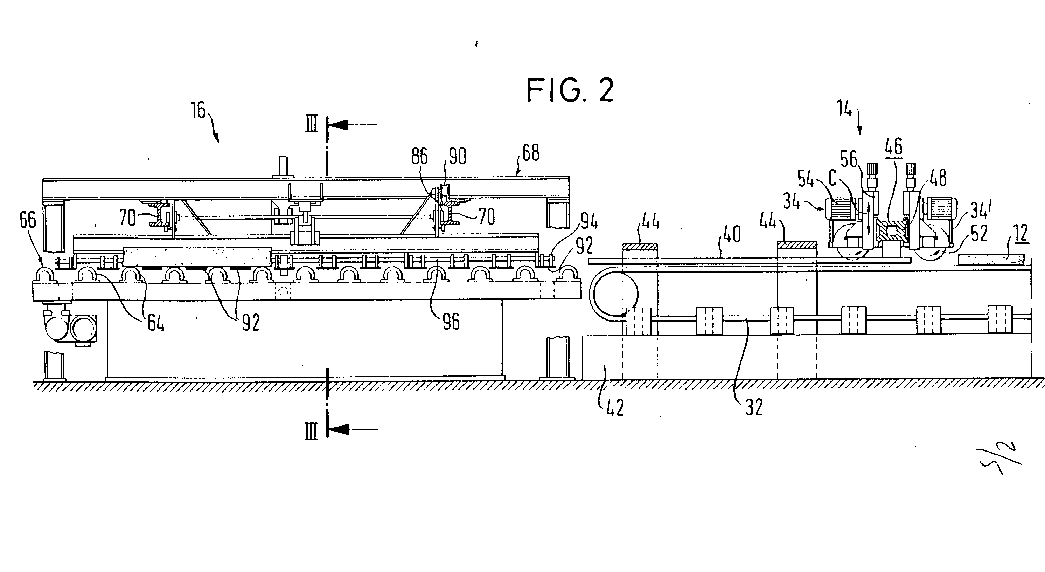

Zum Abtrennen des in Fig. 1 unteren Randstreifens 20 dient ein Trennschwert 40, welches in die vom stationären Sägewerkzeug 34' hergestellte Trennfuge eingreift. Das Trennschwert 40 wird beispielsweise mittels zweier am Fundament 42 der ersten Sägestation 14 befestigter, angenähert U-förmiger Haltebügeln 44 an Ort und Stelle gehalten. Über nicht dargestellte Justiermittel kann das Trennschwert 40 genau auf das erste Sägewerkzeug 34' ausgerichtet werden, so daß es zuverlässig in die entsprechende Trennfuge eingreift. Der Aufbau der ersten Sägestation 14 ist im übrigen herkömmlicher Art. Man erkennt in den Figuren 1 und 2 eine den Bandförderer 32 überspannende Brücke 46, an deren Horizontalträger 48 Werkzeugsupporte 50 in Querrichtung A verstellbar gehaltert sind. An den Supporten 50 wiederum sind das jeweilige Sägeblatt 52 tragende Werkzeugantriebe 54 in Höhenrichtung C verstellbar gehaltert.

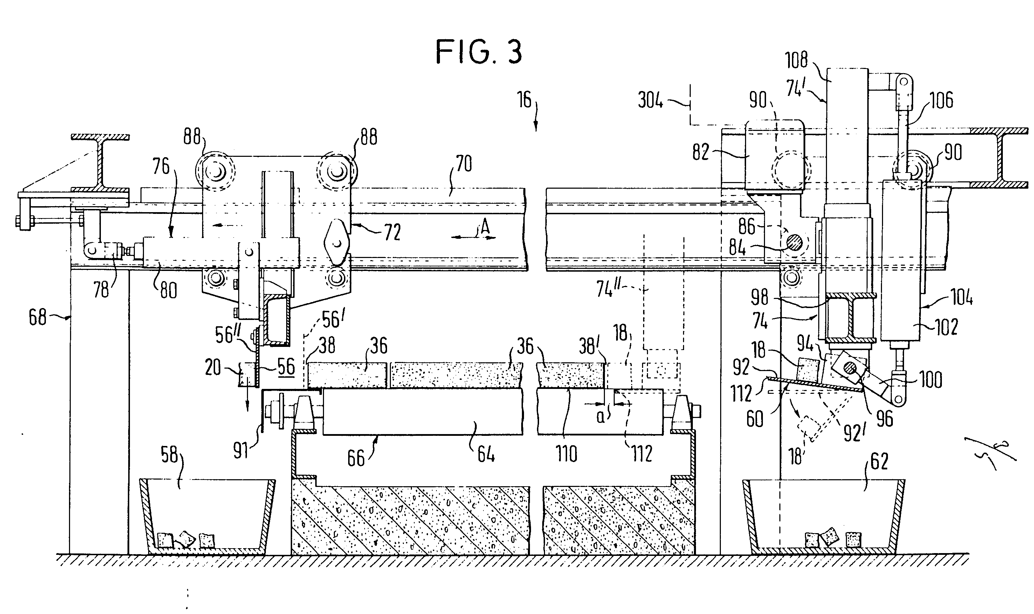

In der Trennstation 16 wird der Randstreifen 20 mit Hilfe eines Trennschiebers 56 in Querrichtung von den Plattenstreifen 36 entfernt und z.B. in einen Abfall-Container 58 abgeworfen. Dementsprechend wird der Randstreifen 18 mit Hilfe eines Hebeorgans 60 angehoben, in Querrichtung von den Plattenstreifen 36 wegbewegt und in einen zweiten Abfall-Container 62 abgeworfen. Wie den Figuren 1 bis 3 zu entnehmen ist, wird ein aus Stützrollen 64 (teils angetrieben, teils nicht angetrieben) gebildeter Rollenförderer 66 von einem stationären Hauptrahmen 68 überspannt mit zwei horizontalen Querträgern 70, an welchen ein erster, den Trennschieber 56 tragender Hilfsrahmen 72 sowie ein zweiter, das Hebeorgan 60 tragender Hilfsrahmen 74 in Querrichtung A beweglich gelagert sind. Man erkennt in Fig. 3 eine Kolben-Zylindereinheit 76, deren Kolbenstange 78 am Hauptrahmen und deren Zylinder 80 am ersten Hilfsrahmen 72 angebracht sind zur wahlweisen Verschiebung des Hilfsrahmens 72. Dementsprechend ist am zweiten Hilfsrahmen 74 ein Antriebsmotor 82 vorgesehen, welcher eine am Hilfsrahmen 74 drehbar gelagerte, zur Bearbeitungsrichtung A parallele Antriebswelle 84 wahlweise antreibt, an deren beiden Enden jeweils ein Antriebsrad 86 angeordnet ist, welches am entsprechenden T-profilförmigen Querträger 70 abrollt. Eine Drehung der Welle 84 hat eine entsprechende Querbewegung des Hilfsrahmens 74 zur Folge. Im übrigen stützen sich der erste und zweite Hilfsrahmen 72 bzw. 74 über Stützräder 88 bzw. 90 an den Querträgern 70 ab.

Gemäß Fig. 3 besteht der Trennschieber 56 aus einer am ersten Hilfsrahmen 72 starr befestigten, in vertikaler Ebene parallel zur Verarbeitungsrichtung A angeordneten länglichen Platte, die in einer in Fig. 1 strichliert angedeuteten Ausgangsstellung 56' mit dem vorangehenden Trennschwert 40 fluchtet bei im wesentlichen gleicher Materialstärke. Der Trennschieber 56 dringt daher in die Trennfuge 38 zwischen Randstreifen 20 und nächstem Plattenstreifen 36 ein. Aus dieser Ausgangsstellung 56' kann durch entsprechende Betätigung der Kolben-Zylinderanordnung 76 der Trennschieber 56 seitlich nach außen in Richtung A bewegt werden in die in Fig. 3 mit durchgezogener Linie dargestellte Abwurfstellung 56'', in welcher der bislang von einem mit den Stützrollen 64 niveaugleichen Randblechstreifen 91 abgestützte Randstreifen 20 unterstützungsfrei oberhalb des Abfall-Containers 58 sich befindet und daraufhin in den Abfall-Container 58 fällt. Anschließend kehrt der Trennschieber 56 wieder in seine Ausgangsstellung 56' zurück.

Das Hebeorgan 60 ist rechenartig ausgebildet mit einer Vielzahl von plattenförmigen Zinken 92, welche jeweils über zwei Laschen 94 drehfest an einer zur Bearbeitungsrichtung B parallelen Welle 96 befestigt sind. Die Welle 96 ist beidendig an einem Längsträger 98 des zweiten Hilfsrahmens 74 verschwenkbar gelagert. Ein an der Welle 96, etwa in Wellenmitte, starr befestigter Lenker 100 ist mit einem Zylinder 102 einer Kolbenstange-Zylindereinheit 104 gelenkig verbunden. Die Kolbenstange 106 dieser Einheit 104 ist mit einem vom Längsträger 98 nach oben abstehenden hilfsrahmenfesten Fortsatz 108 gelenkig verbunden. Eine z.B. rechnergesteuerte Betätigung der Kolbenstange-Zylindereinheit 104 ermöglicht daher ein Verschwenken der Welle 96 und damit der Zinken 92. In einer in Fig. 3 strichliert angedeuteten Einfahr-Schwenkstellung 92'

liegen die plattenförmigen Zinken 92 in einer gemeinsamen horizontalen Ebene knapp unterhalb der Unterseite 110 der auf den Stützrollen 64 aufliegenden Plattenstreifen 36 und Randstreifen 18,20. Wird nun der zweite Hilfsrahmen 74 aus einer in den Figuren 1 und 3 dargestellten Rückzugsstellung 74' in Fig. 3 nach links verfahren, so gelangen die jeweils zwischen aufeinanderfolgenden Stützrollen 64 angeordneten Zinken 92 zwischen diese Stützrollen 64 und schließlich in eine in Fig. 1 punktiert angedeuteten Vorschubstellung 74'' des Hilfsrahmens 74 unterhalb des Randstreifens 18 (in Fig. 3 ebenfalls punktiert angedeutet). Die Vorschubstellung 74'' ist entsprechend der Querorientierung des in Fig. 1 obersten, den Randstreifen 18 trennenden Schneidwerkzeugs 34'' derart festgelegt, daß das freie Ende 112 der jeweiligen Zinken 92 einen Sicherheitsabstand a von etwa 10 mm zur Trennfuge 38' zwischen dem Randstreifen 18 und dem nächstfolgenden Plattenstreifen 36 einnimmt. Anschließend wird durch entsprechende Betätigung der Kolbenstangen-Zylindereinheit 104 die Welle 96 geringfügig (im Uhrzeigersinn der Fig. 3) in eine Rückzugsschwenkstellung verschwenkt, die in Fig. 3 mit durchgezogener Linie angedeutet ist. Der auf diese Weise angehobene Randstreifen 18 gleitet auf der durch die geneigten Zinken 92 gebildeten schiefen Ebene in Richtung zur Welle 96. Der Sicherheitsabstand a ist im übrigen stets derart gewählt, daß der Schwerpunkt des Randstreifens zuverlässig im Bereich der Zinken 92 liegt.

Aus der Einfahrstellung 74'' wird nun der zweite Hilfsrahmen 74 in die in Fig. 3 dargestellte Rückzugsstellung 74' verfahren, in welcher sich die Zinken 92 oberhalb des Abfall-Containers 62 befinden. Nun werden die Zinken 92 im Gegenuhrzeigersinn der Fig. 3 nach unten in eine in Fig. 3 strichpunktiert angedeutete Abwurfschwenkstellung 92'' verschwenkt, in welcher der Randstreifen 18 von den Zinken 92 abgleitet und in den Container 62 fällt.

Die sich an die Trennstation 16 anschließende Wendestation 22 besteht aus einem sich an den Rollenförderer 66 der Trennstation 16 unmittelbar anschließenden Rollenförderer 130 mit gleicher Förderrichtung sowie einem Kettenförderer 132 mit hierzu senkrechter Förderrichtung. Wie Fig. 1 zeigt, greifen die endlosen Ketten 134 des Kettenförderers jeweils zwischen aufeinanderfolgende Walzen 136 des Rollenförderers 130. Der Kettenförderer 132 ist höhenverstellbar. In seiner unteren Ruheposition befindet sich das Obertrum jeder Förderkette 134 unterhalb der durch die Walzen 136 gebildeten Auflagefläche für die Steinplatten 12. In dieser Stellung kann also die in Plattenstreifen 36 zerteilte Steinplatte 12 in die in Fig. 3 dargestellte Übergabestellung oberhalb der Transportketten 134 transportiert werden. Anschließend werden die Transportketten 134 in eine Transportstellung nach oben bewegt, in welcher sie die Plattenstreifen 36 von den Walzen 136 abheben und aus dem Walzenbereich in Fig. 1 nach unten in Richtung des Pfeils D transportieren können. Durch diese 90°-Knickung der Transportrichtung ohne Änderung der Raumorientierung der Plattenstreifen 36 erreicht man also eine Querlage der Plattenstreifen relativ zur Transportrichtung D. Die Platten liegen weiterhin dicht aneinander (lediglich durch die Trennfugen 38 voneinander getrennt) und können in dieser Form (als Pulk) der zweiten Sägestation 26 zugeführt werden. Es besteht jedoch auch die Möglichkeit, einzelne Plattenstreifen 36 jeweils für sich durch die zweite Sägestation hindurchzuführen.

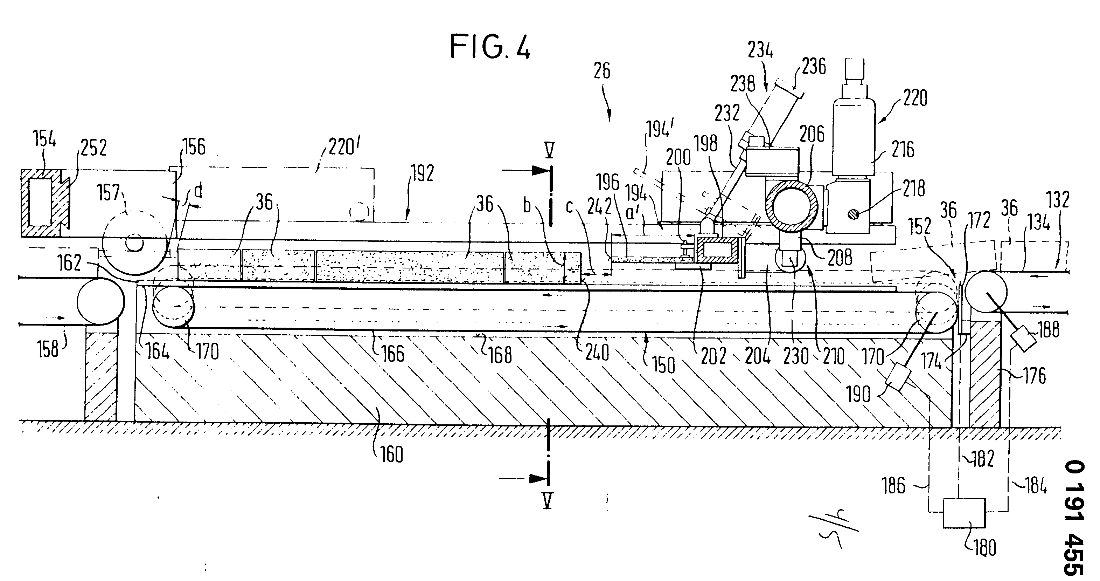

Hierzu ist die Sägestation mit einem höhenverstellbaren Kettenförderer 150 versehen, dessen Förderketten sich von einem Übergabebereich 152 am entsprechenden Ende des vorangehenden Kettenförderers 132 bis unmittelbar vor einer Brücke 154 mit Sägewerkzeugen 156 (in Fig. 4 links) erstrecken. Es schließt sich dann ein in den Figuren 1 und 4 angedeuteter weiterer Kettenförderer 158 an.

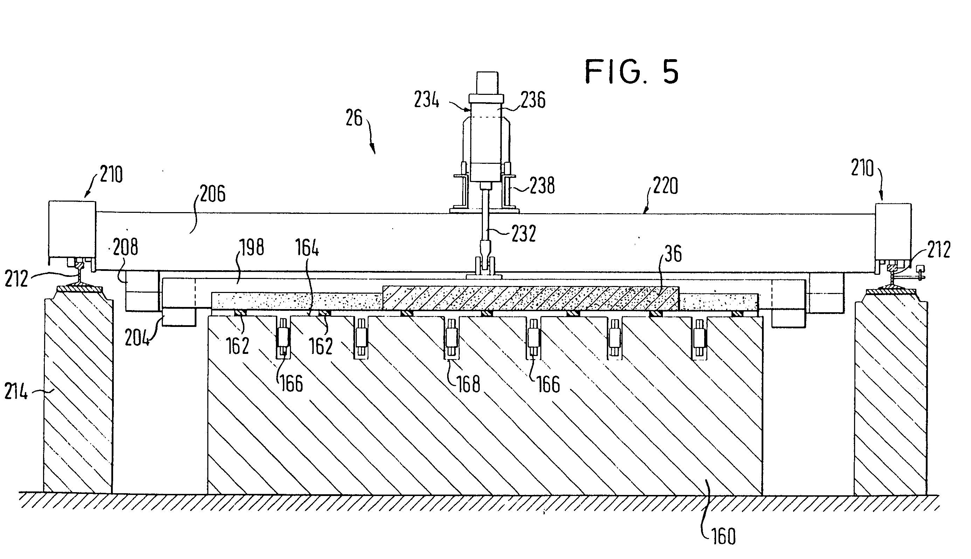

Der Kettenförderer 150 ist in einem nur schemaartig angedeuteten Auflagetisch 160 der Schneidestation 26 im Bereich der Tischoberseite durch nicht dargestellte Mittel höhenverstellbar angeordnet. Wie die Figuren 4 und 5 zeigen, liegen die auf den Auflagetisch 160 transportierten Plattenstreifen 36 auf Kunststoffstreifen 162 auf, die über die Tischoberseite 164 verteilt sind und sich parallel zur Bearbeitungsrichtung D (entsprechend der nunmehrigen Transportrichtung) verlaufen. Die Transportketten 166 des Kettenförderers 150 verlaufen zwischen diesen Streifen 162, im dargestellten vereinfachten Ausführungsbeispiel innerhalb von Längsnuten 168 des Auflagetisches 160. Die Transportketten 166 sind durch entsprechende Höhenverstellung der Umlenkräder 170 sowie ggf. vorgesehener, nicht dargestellter Stützräder zwischen drei Höheneinstellungen verstellbar, nämlich einer in Fig. 4 mit durchgezogener Linie dargestellten Absenkstellung unterhalb des Niveaus der Kunststoff-Streifen 162, einer mit Vereinzelungsstellung bezeichneten, in Fig. 4 punktiert angedeuteten mittleren Stellung und einer in Fig. 4 strichliert angedeuteten oberen Stellung, der Normalstellung. In der Normalstellung haben die beiden Kettenförderer 132 und 166 gleiches Niveau - ein vom Förderer 132 herantransportierter Plattenpulk kann unverändert vom Förderer 166 übernommen werden. In der Vereinzelungsstellung dagegen kippen die einzelnen Plattenstreifen 36 bei der Übergabe mit ihrem Vorlaufende auf den tiefer liegenden Kettenförderer 166, um dann bei Übergabe auch des nachlaufenden Endes vollflächig auf den Kettenförderer 166 zu fallen. Diese Bewegung kann dazu ausgenutzt werden, die einzelnen Plattenstreifen 36 jeweils für sich der zweiten Sägeanordnung 26 zuzuführen. Sobald nämlich der jeweilige Plattenstreifen 36 vollständig auf den Kettenförderer 166 zu liegen kommt, wird, ausgelöst durch einen entsprechenden Sensor, der vorangehende Kettenförderer 132 abgestellt und nur der nachfolgende Kettenförderer 166 am Laufen gehalten. Der entsprechende Plattenstreifen 36 wird also jeweils für sich weitertransportiert. Der Sensor kann die Form eines in Fig. 4 angedeuteten Schaltkontakts 172 haben (Mikroschalter oder dergl.), welcher vom herunterkippenden Nachlaufende der jeweiligen Steinplatte betätigt wird. Der Schaltkontakt 172 befindet sich im Übergabebereich 152 zwischen beiden Kettenförderern und ist über einen in Fig. 4 angedeuteten Halter 174 beispielsweise an einem Trägerrahmen 176 des Kettenförderers 132 stationär bebefestigt. In Fig. 4 ist symbolisch eine Steuerung 180 angedeutet, welche über eine Leitung 182 mit dem Schaltkontakt 172 und über Leitungen 184 und 186 mit einem Antriebsmotor 188 des Kettenförderers 132 bzw. einem Antriebsmotor 190 des Kettenförderers 150 verbunden ist und die angegebenen Steuerungsfunktionen wahrnimmt.

Die Plattenstreifen 36 werden demnach einzeln oder im Pulk vom Kettenförderer 166 weitertransportiert, und zwar in einen Bereich 192 zwischen dem Sägewerkzeug 156 und einem Transportschieber 194, jeweils mit Abstand zu diesen Teilen. Der Transportschieber 194 besteht aus einer plattenförmigen Leiste 196 aus Steinmaterial, welche an einem kastenprofilförmigen Querbalken 198 starr befestigt ist, beispielsweise mittels in Fig. 4 erkennbarer Klemmschrauben 200, welche die Leiste 196 gegen eine Tragplatte 202 andrücken. Die Tragplatte 202 ist an der Unterseite des Querbalkens 198 befestigt, z.B. angeschweißt und kragt einseitig (in Fig. 4 nach links) über den Querbalken 198 hinaus, jedoch nur über einen Teil der Breite a' der Leiste 196. Die Leiste 196 steht also über die Platte 202 vor, und zwar etwa um ihre halbe Breite a'. Der Querbalken 198 ist an seinen beiden Enden mit in gleicher Richtung rechtwinkelig zur Balkenachse abstehenden Armen 204 versehen, die wiederum jeweils an einem von einem rohrförmigen Querträger 206 nach unten abstehenden Arm 208 angelenkt sind. Diese Gelenke 210 befinden sich gemäß Fig. 1 zu beiden Seiten des Auflagetisches 160, um den Vorbeitransport der Steinplatten nicht zu behindern. Der rohrförmige Querträger 206, welcher brückenartig den Auflagetisch 160 überspannt, ist beidends mit jeweils einem Fahrwerk 210 versehen, welches auf je einer Schiene 212 auf einem entsprechenden Schienenfundament 214 beidseits des Auflagetisches 160 verfahren werden kann. Ein in Fig. 4 angedeuteter Fahrwerksantrieb 216 treibt eine Antriebswelle 218 an, an deren beiden Enden jeweils ein auf der entsprechenden Schiene 212 abrollendes, nicht dargestelltes, Antriebsrad drehfest angebracht ist. In Fig. 4 ist mit durchgezogener Linie die mit Rückzugsstellung bezeichnete in Bezug auf die Bearbeitungsrichtung D rückwärtige Endstellung der einen Hilfsrahmen 220 bildenden Teile-Querträger 206 und Fahrwerke 210 dargestellt. Mit einer Strich-Punkt-Linie ist die mit Vorschubstellung 220' bezeichnete entsprechende vordere Endstellung des Hilfsrahmens 220 angedeutet.

Der Transportschieber 194 kann aus einer in Fig. 4 mit durchgezogener Linie dargestellten Arbeitsstellung in eine mit Strich-Punkt-Linie angedeutete Freigabestellung 194' in Fig. 4 nach oben im Uhrzeigersinn um die durch die beiden Gelenke 210 festgelegte, zur Bearbeitungsrichtung D senkrechte und horizontale Schwenkachse 230 und wieder zurückverschwenkt werden. Hierzu greift die Kolbenstange 232 einer Kolbenstange-Zylindereinheit 234 gelenkig an den Querbalken 198 an; der Zylinder 236 der Einheit 234 ist mit einer am rohrförmigen Querträger 206 befestigten, nach oben abstehenden Halterung 238 verbunden. Eine Betätigung der Einheit 234 über eine nicht dargestellte gesteuerte Hydraulikanlage führt zur entsprechenden Verschwenkung des Transportschiebers 194 zwischen den beiden angegebenen Schwenkstellungen.

In der Arbeitsstellung des Transportschiebers 194 befindet sich die plattenförmige Leiste 196 in horizontaler Ebene etwa im Bereich der Höhenmitte der Plattenstreifen 36 In der Freigabestellung 194' dagegen ist der Transportschieber 194 derart hochgeklappt, daß ein ausreichend großer lichter Abstand zwischen den Lagerstreifen 162 und dem Transportschieber 194 gebildet ist und die Plattenstreifen 36 ungehindert unter dem angehobenen Transportschieber 194 vom Kettenförderer 166 (in dessen Normal-stellung oder Vereinzelungsstellung) hindurchtranspor-tiert werden können. Der lichte Abstand muß also wenigstens gleich der Plattendicke b zuzüglich dem Überstand der Transportketten 166 über d e Lagerstreifen 162 sein.

Die Funktionsweise der zweiten Sägestation 26 wird im folgenden kurz angegeben, soweit sie nicht bereits aus dem Vorstehenden hervorgeht. Bei in Freigabestellung hochgeschwenktem Transportschieber 194' werden die vom vorangehenden Kettenförderer 132 angelieferten Plattenstreifen im Pulk oder jeweils einzelnen für sich in den Bereich 192 zwischen den Sägewerkzeugen 156 und den Transportschieber 194 in der Rückzugsstellung des Hilfsrahmens 220 durch den Kettenförderer 166 transportiert. Anschließend wird der Kettenförderer in seine Absenkstellung und der Transportschieber 194 in seine Arbeitsstellung bewegt. Zwischen der hinteren Stirnfläche 240 des jeweils in Bearbeitungsrichtung letzten Plattenstreifens 36 und der vorderen Stirnfläche 242 der Leiste 196 ist anfangs ein Zwischenraum einer Länge c etwa im cm-Bereich vorgesehen, um sicherzustellen, daß die Leiste 196 beim Herunterklappen keinesfalls auf den hinteren Plattenstreifen 36 aufschlägt, selbst dann, wenn während des Transportvorgangs zwischen der ersten Sägestation 14 und der zweiten Sägestation 26 eine mehr oder weniger starke Verdrehung des Plattenpulks um eine zur Plattenebene senkrechte Drehachse stattgefunden hat. Diese Fehlorientierung wird sogleich beseitigt, wenn sich der Hilfsrahmen 220 in Bearbeitungsrichtung D zu den Sägewerkzeugen 156 hin in Bewegung setzt; die Leiste 196 schlägt früher oder später mit ihrer Stirnfläche 242 an die Stirnfläche 240 an und beginnt die Plattenstreifen 36 entgegen der zwischen den Plattenstreifen 36 und den Lagerstreifen 162 wirkenden Reibungskräfte zu den Sägewerkzeugen 156 hin zu verschieben. Hierbei kommt es bei anfänglicher Verdrehung des Plattenpulks bzw. des einzigen Plattenstreifens 36 zu einer Gegendrehung bis zur vollflächigen Anlage der beiden Stirnflächen 240 und 242. Der anfängliche lichte Abstand d zwischen dem vorderen Plattenstreifen 36 und den Sägewerkzeugen 156 reduziert sich zunehmends, bis schließlich die Sägewerkzeuge 156 in das Plattenmaterial einschneiden. Der den Abstand der in diesem Bearbeitungsschritt hergestellten Trennfugen 250 definierende Abstand benachbarter Sägewerkzeuge 156 ist, ähnlich wie bei der Sägestation 14, veränderbar. In Fig. 4 ist dies durch eine Schwalbenschwanzführung 252 zwischen der Brücke 154 und den Werkzeugen 156 symbolisiert. In nicht dargestellter Weise kann auch eine Höhenverstellbarkeit der Sägewerkzeuge 156 wie bei der Sägestation 14 vorgesehen sein.

Der Hilfsrahmen 220 wird in der Folge immer weiter vorgeschoben, bis er schließlich die Vorschubstellung 220' erreicht. Sämtliche Plattenstreifen 36 sind dann über die Sägewerkzeuge 156 hinaus nach vorne auf den Kettenförderer 158 vorgeschoben. In dieser Stellung haben sich die Sägeblätter 157 der Sägewerkzeuge 156 bereits soweit in die Leiste 196 eingeschnitten, daß die vordere Stirnfläche 242 über die Sägeblätter 157 vorkragt und damit zuverlässig den letzten Plattenstreifen 36 aus dem Bereich der Sägeblätter 157 wegdrückt. Die Auflageleiste 202 befindet sich dagegen noch nicht im Bereich der Sägeblätter 157.

Während des Sägevorgangs sorgt die rücktreibende Reibungskraft zwischen den Plattenstreifen 36 und den Auflagestreifen 162 für eine gewisse Vorspannkraft, mit welcher die Plattenstreifen gegen den Transportschieber 134 drücken - die Beibehaltung der genauen Plattenstreifenorientierung im Raum ist gewährleistet, so daß eine genaue Winkelhaltigkeit der neu geschnittenen Trennfugen 250 in Bezug auf die bereits in der ersten Sägestation 14 geschnittenen Trennfugen 38 gewährleistet ist.
Im allgemeinen stehen diese Trennfugen rechtwinkelig aufeinander. Eine rautenartige Anordnung ist bei entsprechend
schräger Orientierung der Leiste 196 erzielbar, wobei
jedoch durch einen seitlichen Anschlag oder durch anderweitige Fixierung der jeweils einzeln zu sägenden Plattenstreifen ein seitliches Wegrutschen verhindert werden
muß.

Um die Vorspannkraft zwischen den Plattenstreifen 36
und dem Transportschieber 194 auch dann noch aufrecht zu
erhalten, wenn die Plattenstreifen 36 bereits größtenteils
die Sägewerkzeuge 156 hinter sich gelassen haben, wird der
nachfolgende Kettenförderer 158 mit einer Fördergeschwindigkeit betrieben, welche geringfügig kleiner ist
als die Vorschubgeschwindigkeit des Hilfsrahmens 220.
Es baut sich dann eine entsprechend rückwärts gerichtete
Bremskraft  auf, die die noch zu sägenden Plattenstreifen
gegen die Leiste 196 drücken.

Bei einer Änderung der Trennfugenabstände durch entsprechende Querverschiebung der Sägewerkzeuge 156 kann
die Leiste 196 oftmals beibehalten werden, da sie auch
dann noch ausreichend stabil ist, wenn die neu orientierten Sägewerkzeuge weitere Schlitze in die Leiste 196
einschneiden.

Zur Fig. 1 sei noch nachgetragen, daß die Steuerung 300
für die synchrone Nachverstellung der Vorschubstellung 74''
des Hilfsrahmens 74 mit der Verstellung des oberen äußeren
Sägewerkzeugs 34'' sorgt. Hierzu ist die Steuerung 300
über eine Steuerleitung 302 mit einem nicht dargestellten
seitlichen Verstellantrieb des Sägewerkzeugs 34'' verbunden und über eine Leitung 304 mit dem lediglich in Fig. 3 dargestellten Antriebsmotor 82 für die Verschiebebewegung des Hilfsrahmens 74.

PATENTANWÄLTE DIPL.-ING. H. WEICKMANN,
DIPL.-ING. F. A. WEICKMANN
DR.-ING. H. LISKA, Dipl.-Phys.Dr.J.Prechtel

PREwe

Steinbearbeitungs-Maschinenfabrik
Carl Meyer
8590 Marktredwitz

8000 MÜNCHEN 86
POSTFACH 860 820
MÜHLSTRASSE 22
TELEFON (0 89) 98 03 52
TELEX 5 22 621
TELEGRAMM PATENTWEICKMANN MÜNCHEN

**0 191 455**

---

Steinsäge zum Zerteilen von Steinplatten oder dergl.

---

## Patentansprüche

1. Steinsäge zum Zerteilen von Steinplatten (12) oder dergl.
   mit wenigstens zwei an einem Werkzeugträger, ggf. einer
   Brücke (46), angebrachten Sägewerkzeugen (34), welche in
   Richtung (A) quer zur Verschiebebewegung der Steinplatte
   (12) relativ zum Werkzeugträger mit einstellbarem gegenseitigem Abstand versetzt sind,
   dadurch gekennzeichnet,
   daß in Bearbeitungsrichtung (B) einem der Sägewerkzeuge,
   vorzugsweise einem der beiden in Querrichtung äußeren Sägewerkzeuge (34), ein in die von diesem Sägewerkzeug (34')
   hergestellte Trennfuge (30) der Steinplatte (12) eingreifendes Trennschwert (20) folgt, und daß das Trennschwert (20) oder ein dem Trennschwert (20) folgender
   Trennschieber (56) einer Trennstation (16) zwischen einer
   Ausgangsstellung (56) in Flucht mit dem Trennschwert (20)
   und einer Trennstellung (56'') in Querrichtung bewegbar ist.

2. Steinsäge nach Anspruch 1 oder dem Oberbegriff des Anspruch 1,

dadurch g e k e n n z e i c h n e t ,

daß in einer bzw. der den Sägewerkzeugen (34) in Bearbeitungsrichtung (B) folgenden Trennstation (16) ein ggf. dem Trennschieber (56) gegenüberliegendes Hebeorgan (60) vorgesehen ist, mit welchem ein Randstreifen (18) der zerteilten Steinplatte (12) anhebbar und in Querrichtung (A) bewegbar ist.

3. Steinsäge nach Anspruch 2,

dadurch g e k e n n z e i c h n e t ,

daß das Trennschwert (20) sowie das diesem zugeordnete in Querrichtung (A) äußere Sägewerkzeug (34') relativ zum Werkzeugträger bezüglich der Querrichtung (A) stationär sind, und daß eine Steuerung vorgesehen ist zur gleichzeitigen Querverlagerung des gegenüberliegenden äußeren Sägewerkzeugs (34'') und des Hebeorgans (60) bei Abänderung der Schnittbreite.

4. Steinsäge nach Anspruch 2 oder 3,

dadurch g e k e n n z e i c h n e t ,

daß das Hebeorgan (60) einen Heberechen umfaßt mit Zinken (92), welche zwischen die zerteilte Steinplatte (12) tragende Stützorgane, vorzugsweise Stützrollen (64) eingreifen.

5. Steinsäge nach Anspruch 3 oder 4,

dadurch g e k e n n z e i c h n e t ,

daß die Trennstation einen stationären, vorzugsweise brückenartigen, Hauptrahmen (68) umfaßt, an welchem ein erster, den Trennschieber (56) tragender Hilfsrahmen (72) und/oder ein zweiter, das Hebeorgan (60) tragender Hilfsrahmen (74) in Querrichtung (A) beweglich gelagert sind.

6. Steinsäge nach Anspruch 5,
   dadurch  g e k e n n z e i c h n e t  ,
   daß am zweiten Hilfsrahmen (74) eine die Zinken (92)
   tragende, zur Verarbeitungsrichtung (B) im wesentlichen
   parallele Welle (96) drehbar gelagert ist.

7. Steinsäge nach Anspruch 6,
   dadurch  g e k e n n z e i c h n e t  ,
   daß die Welle (96) zwischen einer Einfahr-Schwenkstellung mit zur Querrichtung im wesentlichen parallelen Zinken (92), einer Rückzug-Schwenkstellung mit
   angehobenen freien Zinkenenden und einer Abwurf-
   Schwenkstellung mit abgesenkten freien Zinkenenden
   verschwenkbar ist.

8. Steinsäge nach einem der vorhergehenden Ansprüche oder
   dem Oberbegriff des Anspruchs 1,
   dadurch  g e k e n n z e i c h n e t  ,
   daß  den  Sägewerkzeugen (156) in Bearbeitungsrichtung (D) ein stationäres Gleitauflager vorangeht, daß ein
   an das in Bearbeitungsrichtung (D) hintere Ende der
   wenigstens einen auf dem Gleitauflager liegenden, zu
   zerteilenden Steinplatte (36) angreifender Transportschieber (194) vorgesehen ist, welcher zwischen einer
   Rückzugsstellung in eine den  Sägewerkzeugen (156)
   nächstgelegenen Vorschubrichtung in Bearbeitungsrichtung (D) verschiebbar ist, und daß ein Förderer
   (166) vorgesehen ist zum Transport der wenigstens
   einen zu zerteilenden Steinplatte (36) auf das Gleitauflager im Bereich zwischen den  Sägewerkzeugen (156)
   und dem Transportschieber (194) in dessen Rückzugsstellung.

9. Steinsäge nach Anspruch 8,
   dadurch  g e k e n n z e i c h n e t  ,

daß der Transportschieber (194) mit einer vorzugsweise von den Sägewerkzeugen (156) schneidbaren
Leiste (196) zum Angriff an das jeweils hintere
Plattenende versehen ist.

10. Steinsäge nach Anspruch 9,
dadurch g e k e n n z e i c h n e t ,
daß die Leiste (196) aus einem dem zu schneidenden
Steinmaterial im wesentlichen entsprechenden Material
besteht.

11. Steinsäge nach Anspruch 10,
dadurch g e k e n n z e i c h n e t ,
daß der Transportschieber (194) zwischen einer Arbeitsstellung am Gleitauflager in Höhe der zu zerteilenden Steinplatte (36) und einer Freigabestellung
(194') in einer wenigstens der Steinplattendicke (b)
entsprechenden Entfernung vom Gleitauflager bewegbar
ist.

12. Steinsäge nach einem der Ansprüche 8 bis 10,
dadurch g e k e n n z e i c h n e t ,
daß ein den Transportschieber (194) halternder, in
Bearbeitungsrichtung (D) bewegbarer Hilfsrahmen (220)
vorgesehen ist.

13. Steinsäge nach Anspruch 12,
dadurch g e k e n n z e i c h n e t ,
daß am Hilfsrahmen (220) ein in Querrichtung verlaufender, den Transportschieber (194) tragender
Querbalken (198) um eine zur Querrichtung im wesentlichen parallele Achse (230) schwenkbar gelagert ist.

14. Steinsäge nach einem der Ansprüche 8 bis 13,
dadurch g e k e n n z e i c h n e t ,

daß ein auf die Trennwerkzeuge (156) in Bearbeitungsrichtung (D) folgender Förderer, vorzugsweise Kettenförderer (158), vorgesehen ist, der synchron oder geringfügig langsamer transportiert als der Transportschieber (196).

15. Steinsäge nach einem der vorhergehenden Ansprüche oder dem Oberbegriff des Anspruchs 1,
dadurch g e k e n n z e i c h n e t ,
daß zwei aneinander anschließende Förderer, vorzugsweise Kettenförderer (132,166), vorgesehen sind, wobei der in Transportrichtung vordere Förderer (166) in einer Vereinzelungsstellung tiefer liegt als der vorangehende Förderer (132) und wobei vorzugsweise ein Sensor im Übergangsbereich (152) zwischen beiden Förderern vorgesehen ist, welcher den Vorbeilauf einer Steinplatte, vorzugsweise des hinteren Steinplattenendes, feststellt.

16. Steinsäge nach Anspruch 15,
dadurch g e k e n n z e i c h n e t ,
daß der Sensor von einem Schaltkontakt (172) gebildet ist, welcher von dem beim Vorbeilauf absinkenden hinteren Plattenende tätigbar ist.

17. Steinsäge nach Anspruch 15 oder 16,
dadurch g e k e n n z e i c h n e t ,
der der vordere Förderer (166) in eine Normalstellung mit gleichem Niveau wie der hintere Förderer (132) bewegbar ist.

18. Steinsäge nach einem der Ansprüche 15 bis 17,
dadurch g e k e n n z e i c h n e t ,
daß der vordere Förderer (166) im Bereich des Gleitauflagers verläuft und zwischen der Normalstellung, der Vereinzelungsstellung und einer Absenkstellung unterhalb des Niveaus des Gleitauflagers bewegbar ist.

19. Steinsäge nach einem der Ansprüche 8 bis 18, dadurch gekennzeichnet , daß das Gleitauflager von zur Bearbeitungsrichtung (D) parallelen Lagerstreifen (162), vorzugsweise Kunststoffstreifen, gebildet ist.

20. Verwendung der Steinsäge nach einem der Ansprüche 8 bis 19 zum Zerteilen von bereits in Querrichtung, vorzugsweise mit Hilfe der Steinsäge gemäß einem der Ansprüche 1 bis 7, zerteilten Steinplatten.

FIG. 1

0 191 455

1/5

# FIG. 2

0 191 455

# FIG. 3

0 191 455

# FIG. 4

0 191 455

# FIG. 5

## EINSCHLÄGIGE DOKUMENTE

EP 86101696.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US - A - 4 131 103 (ISHIZUKA) <br> * Fig. 4 * <br> -- | 1,2,8, 20 | B 28 D 1/04 |
| A | US - A - 2 502 043 (HOWARD) <br> * Fig. 7 * <br> -- | 1 | |
| A | GB - A - 1 073 176 (S.P.A. SECO-BLITZ) <br> * Fig. 7 * <br> -- | 1 | |
| A | DE - B - 1 061 677 (TUBAG) <br> * Gesamt * <br> -- | 1 | |
| A | DE - A - 2 741 955 (GIBEN) <br> * Seite 4, Zeilen 3-14 * <br> ---- | 1 | |

RECHERCHIERTE
SACHGEBIETE (Int. Cl.4)

B 23 D

B 27 B

B 28 D

B 66 C

B 66 F

Der vorliegende Recherchenbericht wurde für alle Patentansprüche erstellt.

| Recherchenort | Abschlußdatum der Recherche | Prüfer |
|---|---|---|
| WIEN | 22-05-1986 | GLAUNACH |